# EUROPÄISCHE PATENTSCHRIFT

(11) **EP 0 938 181 B1**
(45) Veröffentlichungstag und Bekanntmachung des Hinweises auf die Patenterteilung: **28.11.2001**
(21) Anmeldenummer: 99101656.9
(22) Anmeldetag: 05.02.1999
(51) Int. Cl.: H02K 1/14

(54) **Drehstrommotor**
A.C. motor
Moteur à courant alternatif

(30) Priorität: 13.02.1998 DE 19805981
(43) Veröffentlichungstag der Anmeldung: 25.08.1999
(73) Patentinhaber: SIEMENS AKTIENGESELLSCHAFT, 80333 München (DE)
(72) Erfinder: Klaus, Georg, Dipl.-Ing, 97616 Salz (DE); Huth, Gerhard, Prof., 97618 Leutershausen (DE); Schüller, Uwe, Dr., 98693 Ilmenau (DE)

(56) Entgegenhaltungen:
- DE-A- 2 653 387
- GB-A- 2 123 318
- US-A- 5 057 733

## Beschreibung

Die Maschine betrifft einen Drehstrommotor.

Aus der EP- 0 629 034 B1 ist ein Elektromotor bekannt, dessen Stator in Umfangsrichtung in einzelne Abschnitte unterteilt ist. Diese Abschnitte sind durch vorstehende und zurückspringende Eingriffsabschnitte und durch Schweißen an inneren und äußeren Umfangsabschnitten miteinander verbunden. Durch Aufwickeln von Draht auf die jeweiligen Abschnitte, wird vor dem Verbinden die Wicklung auf jeden Abschnitt gebracht.

Eine derartige Herstellung eines Motors ist aufgrund der Vielzahl der unterschiedlichsten Montageschritte (Wickeln eines Abschnitts, Aneinanderfügen der Abschnitte, Verschweißen der Abschnitte etc.) äußerst zeitaufwendig. Zusätzlich treten bei allgemein bekannten Fertigungsvorgängen von Drehstrommotoren großer Innen- oder Außendurchmessers eine Reihe von Nachteile auf. Große Schnittkräfte und große Durchmesser erfordern bzgl. Schnittkraft und Größe angepaßte Stanzen. Es treten außerdem große Schnittabfälle aufgrund schlechter Blechstreifenausnutzung auf. Große Durchmesser erfordern speziell angepaßte Wickel- und Einziehwerkzeuge.

Ausgehend davon ist es eine Aufgabe der vorliegenden Erfindung einen Drehstrommotor zu schaffen, der obige Nachteile vermeidet und außerdem herstellungs- und montagefreundlich ist.

Die Lösung der gestellten Aufgabe gelingt mit einem elektrischen Drehstrommotor, dessen Stator folgende Merkmale aufweist:
a) In Umfangsrichtung des Stators und/oder in axialer Richtung des Motors segmentierte Teilblechpakete.
b) Diese Teilblechpakete haben mindestens einen Statorzahn und Mittel zur Befestigung in einer eine zylindrische oder polygonförmige Innenkontur aufweisende Aufnahme.
c) Die Statorzähne sind mit vorgefertigten Spulen bestückbar. Die verschalteten Zahnspulen bilden eine phasenreine Bruchlochwicklung.
d) Diese Spulen sind als Zahnspulen ausgebildet und sind zu einer phasenreinen Bruchlochwicklung verschaltbar und
e) Diese Spulen sind mit an den Statorzähnen befestigbaren Zahnkopfelementen fixiert.

Durch einen derartigen Aufbau eines Drehstrommotors lassen sich vorgefertigte Teile, wie z.B. Zahnspulen oder Statorblechpakete, die Joch und Zahn enthalten, verwenden.

Außerdem ergeben sich gegenüber herkömmlichen Lösungen durch form- und /oder reibschlüssig oder stoffschlüssig mit den Statorzähnen de Teilblechpakete verbundenen Zahnkopfelementen Montagevorteile. Dabei werden die separat wickelbaren Zahnspulen vom Luftspalt aus auf die Statorzähne gesetzt. Durch die Fixierung der Zahnspulen durch die Zahnkopfelemente werden die Nuten bis auf einen geringen Spalt verschlossen, der notwendig ist, um Sättigungsvorgänge zu unterbinden und die Nutstreuung zu begrenzen.

Die Zahnkopfelemente als auch die Teilblechpakete selbst, können stanzpaketiert oder aus einstückigen Teilen, z.B. Eisencompositwerkstoffen, hergestellt sein. Eisencompositwerkstoff hat ähnliche magnetische und elektrische Eigenschaften wie geblechte Ausführungsformen. Durch elektrisches Verschalten der Zahnspulen der einzelnen Teilblechpakete untereinander und/oder mit Spulen anderer Teilblechpakete können betriebsbedingte Anforderungen an den Elektromotor (Drehmomentenausbildung, etc.) erfüllt werden.

Bei einer erfindungsgemäßen Weiterbildung von Drehstrommotoren, deren Statorumfang nicht komplett mit Teilblechpaketen besetzt ist, kann eine gleichmäßige Drehmomentverteilung erzielt werden, indem bei einem axial geteilten Stator Teilblechpakete auf Lüche gesetzt werden und so ein nahezu konstanter Drehmomentenverlauf erreicht wird.

Das Einsetzen der Teilblechpakete in eine Aufnahme, deren Innenkontur zylindrisch oder polygonförmig ist, und z.B. als Seiltrommel oder Gehäuse eines elektrischen Drehfeldmotors ausgebildet sein kann, unterstreicht die universelle Einsetzbarkeit dieses Motors.

In die als Gehäuse ausgebildete Aufnahme können gemäß einer weiteren Ausgestaltung eines derartigen Drehstrommotors Kühlkanäle für Luft- oder Flüssigkeitskühlung vorgesehen werden. Dabei können die Kühlkanäle axial durchgehend, mäanderförmig oder spiralförmig verlaufen und unterschiedliche Querschnitte aufweisen.

Anhand eines Ausführungsbeispiels wird die Erfindung näher erläutert. Es zeigen:
- FIG 1: ein Teilblechpaket, bestehend aus drei Stän derzähnen,
- FIG 2: eine zylindrische Aufnahme, die durch Teilblechpakete besetzt ist.

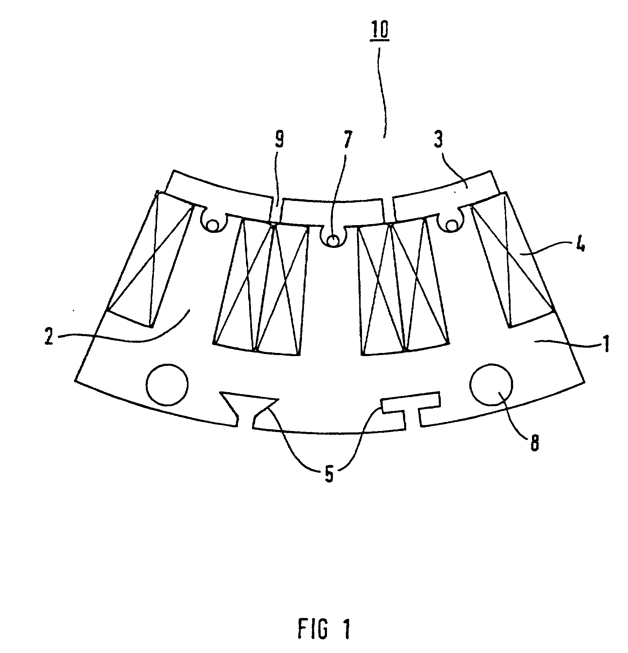

FIG 1 zeigt ein Teilblechpaket 1 mit drei Ständerzähnen 2, deren Ständerzähne 2 im Zahnkopfbereich durch Zahnkopfelemente 3 abgeschlossen sind. Dadurch werden die auf die Ständerzähne 2 von der Luftspaltseite aufgeschobenen Zahnspulen 4 radial und axial fixiert. In diesem Teilblechpaket 1 sind auβerdem Lagefixierungen 5 in einer zylindrischen Aufnahme 6 vorgesehen. Es sind dabei schwalbenschwanzartige Aussparungen 5 vorhanden, in die die Schwalbenschwänze der zylindrischen Aufnahme eingreifen und dabei das Teilblechpaket 1 radial fixieren. Eine axiale Fixierung des Teilblechpaketes 1 in der zylindrischen Aufnahme 6 kann durch nicht näher dargestellte Lagerschilde erfolgen.

Zur Fixierung der Teilblechpakete können Bolzen 8 vorgesehen werden. Die Zahnkopfelemente 3 weisen nach der Montage einen Nutschlitz 9 auf, der notwendig ist, um die Nutstreuung zu begrenzen, Sättigung zu verhindern und der möglichst klein gehalten werden sollte, um Nutrastmomente zu reduzieren. Eine asymmetrische Gestaltung der Zahnkopfelemente 3 in axialer Richtung trägt ebenfalls zur Reduzierung der Nutrastmomente bei.

Die Zahnkopfelemente 3 können stanzpaketiert, als auch aus einstückigem Eisencompositwerkstoff bestehen. Ebenso können die Teilblechpaket 1 aus einem einstückigem Werkstoff, z.B. Einsencompositwerkstoff, bestehen. Als reibschlüssiges Verbindungselement zeigt FIG 1 ein Spreizelement 7, mit dem die Zahnkopfelemente 3 am Ständerzahn 2 befestigt sind. Andere allgemein bekannte form- und/oder reibschlüssige oder stoffschlüssige Verbindungsarten sind ebenfalls einsetzbar.

Eine weitere nicht dargestellte Möglichkeit der Fixierung der Zahnspulen 4 an den Ständerzähnen 2 besteht darin, die Zahnspulen 4 derart auf den Ständerzähnen 2 zu imprägnieren, daß gleichzeitig ein Stoffschluß mit den Ständerzähnen 2 hergestellt wird, so daß keine Zahnkopfelemente 3 zur Fixierung der Zahnspulen 4 notwendig sind.

Die Zahnspulen 4 können in einem Teilblechpaket 1 elektrisch verschalten werden, so daß dieses Teilblechpaket 1 ein für sich abgeschlossenes Modul 10 bildet, das an beliebiger Stelle des Umfangs der zylindrischen Aufnahme 6 einsetzbar ist.

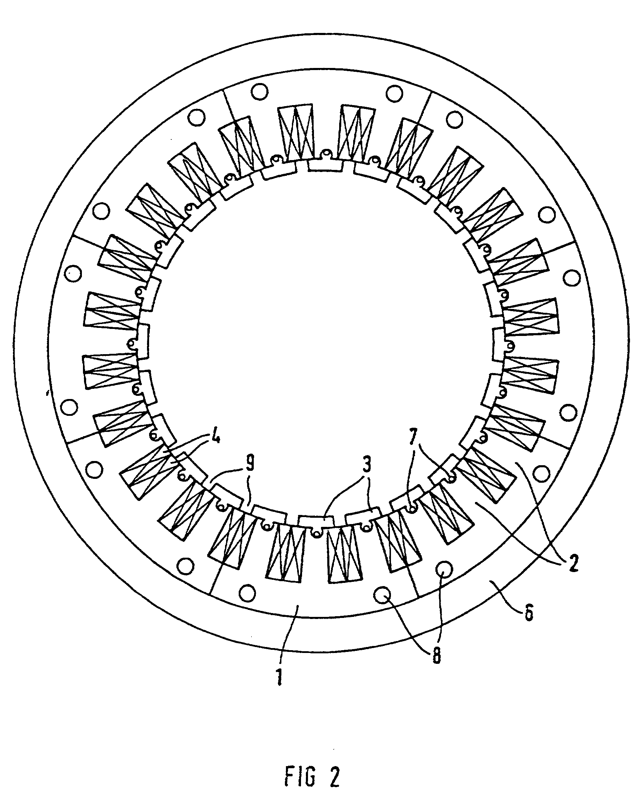

FIG 2 zeigt eine zylindrische Aufnahme 6 mit acht in Umfangsrichtung verteilten Teilblechpaketen 1. Jedes Teilblechpaket 1 besteht aus den in FIG 1 beschriebenen Komponenten. Aus Gründen der Übersichtlichkeit wurden die Lagefixierungen 5 nicht in FIG 2 mit aufgenommen. Die zylindrische Aufnahme 6 ist in Umfangsrichtung komplett mit Teilblechpaketen 1 besetzt, um eine maximale Drehmomentausbeute des Motors zu erlangen. Denkbar ist auch zylindrische Aufnahmen 6, die nur zum Teil mit Teilblechpaketen 1 besetzt sind, weil für einen vorgegebenen Anwendungsfall kein derart hohes Drehmoment erforderlich ist.

Dadurch, daß die einzelnen Module 10 nahezu autark sind, kann sich der Anwender von Fall zu Fall "seinen" Motor mit den erforderlichen Leistungsdaten zusammensetzen. Dies wird dadurch ermöglicht, daß jedes Teilblechpaket 1 nicht auf ein Nachbarteilblechpaket zur Befestigung angewiesen ist, sondern mit seiner zylindrischen Aufnahme 6 verbunden wird. Es sind dabei die bekannten Verbindungsarten des Reib- und Stoffschlusses, als auch des Formschlusses vorstellbar. Die zylindrische Aufnahme 6 kann im Einsatzfall eine Seiltrommel bilden, sie kann auch das Gehäuse eines Elektromotors bilden, in das nicht dargestellte Kühlkanäle axial eingebettet oder vergossen sind, so daß der Drehstrommotor zusätzlich luft- oder flüssigkeitsgekühlt betrieben werden kann.

Denkbar ist ebenso statt der Fixierung der Zahnspulen 4 durch Zahnkopfelemente 3, die Zahnspulen 4 auf die Zähne zu stecken und so in das Statorjochblechpaket einzusetzen.

## Patentansprüche

1. Elektrischer Drehstrommotor mit einem Stator, der folgende Merkmale aufweist:
a) In Umfangsrichtung des Stators und/oder in axialer Richtung des Motors segmentierte Teilblechpakete (1),
b) diese Teilblechpakete (1) haben jeweils mindestens einen Statorzahn (2) und Mittel zur Befestigung in einer eine zylindrische oder polygonförmige Innenkontur aufweisende Aufnahme (6),
c) die Statorzähne (2) sind mit vorgefertigten Spulen (4) bestückbar,
d) diese Spulen sind als Zahnspulen (4) ausgebildet und sind zu einer phasenreinen Bruch-Loch-Wicklung verschaltbar und
e) die Spulen (4) sind mit an den Statorzähnen (2) befestigbaren Zahnkopfelementen (3) fixiert.

2. Elektrischer Drehstrommotor nach Anspruch 1, d a**durch gekennzeichnet**, daß die Teilblechpakete (1) und/oder die Zahnkopfelemente (3) stanzpaketiert sind.

3. Elektrischer Drehstrommotor nach Anspruch 2, , d a**durch gekennzeichnet**, daß die Zahnkopfelemente (3) mit den Statorzähnen (2) der Teilblechpakete (1) form- und/oder reibschlüssig und/oder stoffschlüssig verbunden sind.

4. Elektrischer Drehstrommotor nach Anspruch 3, , d a**durch gekennzeichnet**, daß die Zahnkopfelemente (3) durch Spreizelemente (7) oder schwalbenschwanzartige Verbindungen mit den Statorzähnen (2) verbunden sind.

5. Elektrischer Drehstrommotor nach einem der vorhergehenden Ansprüche, , **dadurch gekennzeichnet, daß** die Zahnspulen (4) der Teilblechpakete (1) untereinander und/oder mit Zahnspulen (4) anderer Teilblechpakete (1) verschaltbar sind.

6. Elektrischer Drehstrommotor nach einem der vorhergehenden Ansprüche, , **dadurch gekennzeichnet, daß** Teilblechpakete (1) nur einen gewissen Teil des Statorumfanges besetzen und mit axial versetzten Teilblechpaketen (1) auf Lücke stehen.

7. Elektrischer Drehstrommotor nach Anspruch 6, , d a**durch gekennzeichnet**, daß die Teilblechpakete (1) form- und/oder reibschlüssig mit der zylindrischen oder polygonförmigen Aufnahme (6) verbunden sind.

8. Elektrischer Drehstrommotor nach Anspruch 7, , d a**durch gekennzeichnet**, daß die Aufnahme (6) als Seiltrommel oder Gehäuse des elektrischen Drehstrommotors ausgebildet ist.

9. Elektrischer Drehstrommotor nach Anspruch 8, , d a**durch gekennzeichnet**, daß die als Gehäuse ausgebildete Aufnahme (6) des elektrischen Drehstrommotors mit Kühlkanälen für Luft- oder Flüssigkeitskühlung versehen ist.

## Claims

1. Electric three-phase motor with a stator which has the following features:
a) segmented laminated-core assemblies (1) in the circumferential direction of the stator and/or in axial direction of the motor,
b) these laminated-core assemblies (1) each have at least one stator tooth (2) and means for fastening in a receiver (6) having a cylindrical or polygonal interior contour,
c) the stator teeth (2) can be equipped with prefabricated coils (4),
d) these coils are configured as tooth coils (4) and can be connected to a phase-pure fractional-slot winding coil, and
e) these coils (4) are fixed to tooth-tip elements (3) which can be fastened to the stator teeth (2).

2. Electric three-phase motor according to Claim 1, **characterised in that** the laminated-core assemblies (1) and/or the tooth-tip elements (3) are punch packed.

3. Electric three-phase motor according to Claim 2, **characterized in that** the tooth-tip elements (3) are connected to the stator teeth (2) of the laminated-core assemblies (1) by positive fit and/or by friction and/or by union of material.

4. Electric three-phase motor according to Claim 3, **characterised in that** the tooth-tip elements (3) are connected to the stator teeth (2) through expansion elements (7) or dovetail type joints.

5. Electric three-phase motor according to one of the preceding claims, **characterised in that** the tooth coils (4) of the laminated-core assemblies (1) can be interconnected among each other and/or with tooth coils (4) of other laminated-core assemblies (1).

6. Electric three-phase motor according to one of the preceding claims, **characterised in that** laminated-core assemblies (1) occupy only a certain portion of the stator circumference and are situated at gaps with axially offset laminated-core assemblies (1).

7. Electric three-phase motor according to Claim 6, **characterised in that** the laminated-core assemblies (1) are connected to the cylindrical or polygonal receiver (6) by positive fit and/or by friction.

8. Electric three-phase motor according to Claim 7, **characterised in that** the receiver (6) is configured as cable drum or housing of the electric three-phase motor.

9. Electric three-phase motor according to Claim 8, **characterised in that** the receiver (6) of the electric three-phase motor, which is configured as housing, is provided with cooling channels for air or liquid cooling.

## Revendications

1. Moteur électrique à courant alternatif triphasé comportant un stator qui comporte les caractéristiques suivantes :
a) des sous-paquets (1) de tôle segmentés dans la direction périphérique du stator et/ou dans la direction axiale du moteur ;
b) ces sous-paquets (1) de tôle ont respectivement au moins une dent (2) de rotor et des moyens de fixation dans un dispositif (6) de réception ayant un contour intérieur cylindrique ou polygonal ;
c) les dents (2) de stator peuvent être munies de bobines (4) préfabriquées ;
d) ces bobines sont réalisées en bobines (4) dentées et peuvent être connectées à un enroulement à nombre fractionnaire d'encoches exempt de déphasage et
e) les bobines (4) sont immobilisées par des éléments (3) de tête de dent qui peuvent être fixés aux dents (2) de stator.

2. Moteur électrique à courant alternatif triphasé suivant la revendication 1, **caractérisé en ce que** les sous-paquets (1) de tôle et/ou les éléments (3) de tête de dent sont des paquets estampés.

3. Moteur électrique à courant altematif triphasé suivant la revendication 2, **caractérisé en ce que** les éléments (3) de tête de dent sont reliés avec complémentarité de forme et/ou avec coopération par friction et/ou avec coopération de matière aux dents (2) de stator des sous-paquets (1) de tôle.

4. Moteur électrique à courant alternatif triphasé suivant la revendication 3, **caractérisé en ce que** les éléments (3) de tête de dent sont reliés aux dents (2) de stator par des éléments (7) d'écartement ou de liaison du genre à queues d'aronde.

5. Moteur électrique à courant alternatif triphasé suivant l'une des revendications précédentes, **caractérisé en ce que** les bobines (4) dentées des sous-paquets (1) de tôle peuvent être connectées les unes aux autres et/ou avec des bobines (4) dentées d'autres sous-paquets (1) de tôle.

6. Moteur électrique à courant alternatif triphasé suivant l'une des revendications précédentes, **caractérisé en ce que** des sous-paquets (1) de tôle n'occupent qu'une certaine partie de la circonférence du stator et se trouvent sur des interstices en ayant des sous-paquets (1) de tôle décalés axialement.

7. Moteur électrique à courant alternatif triphasé suivant la revendication 6, **caractérisé en ce que** les sous-paquets (1) de tôle sont reliés avec complémentarité de forme et/ou avec coopération de friction au dispositif (6) de réception cylindrique ou polygonale.

8. Moteur électrique à courant alternatif triphasé suivant la revendication 7, **caractérisé en ce que** le dispositif (6) de réception est réalisé en tambour d'enroulement ou en boîtier du moteur électrique à courant alternatif triphasé.

9. Moteur électrique à courant alternatif triphasé suivant la revendication 8, **caractérisé en ce que** le dispositif (6) de réception, réalisé en boîtier, du moteur électrique à courant alternatif triphasé est muni de canaux de refroidissement pour refroidissement par air ou par liquide.
